(19) **Europäisches Patentamt / European Patent Office / Office européen des brevets**

(11) **EP 4 470 383 A1**

(12) **EUROPEAN PATENT APPLICATION**
published in accordance with Art. 153(4) EPC

(43) Date of publication:
**04.12.2024 Bulletin 2024/49**

(21) Application number: **22923624.5**

(22) Date of filing: **27.12.2022**

(51) International Patent Classification (IPC):
**A23C 9/152** (2006.01)    **A23C 9/158** (2006.01)
**A23C 9/156** (2006.01)    **A23C 9/16** (2006.01)

(52) Cooperative Patent Classification (CPC):
**A23C 9/152; A23C 9/156; A23C 9/158; A23C 9/16**

(86) International application number:
**PCT/CN2022/142351**

(87) International publication number:
**WO 2023/142838 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **25.01.2022 CN 202210086472**

(71) Applicants:
• **Inner Mongolia Yili Industrial Group Co. Ltd.**
**Hohhot, Inner Mongolia 010000 (CN)**
• **Inner Mongolia Dairy Tech Res Institute Co Ltd**
**Hohhot City, Inner Mongolia 010000 (CN)**

(72) Inventors:
• **LAN, Hanglian**
**Hohhot, Inner Mongolia 010000 (CN)**
• **SZETO, Ignatius Man-Yau**
**Hohhot, Inner Mongolia 010000 (CN)**

• **YUN, Zhanyou**
**Hohhot, Inner Mongolia 010000 (CN)**
• **LIU, Biao**
**Hohhot, Inner Mongolia 010000 (CN)**
• **LI, Wei**
**Hohhot, Inner Mongolia 010000 (CN)**
• **KONG, Xiaoyu**
**Hohhot, Inner Mongolia 010000 (CN)**
• **LIU, Bin**
**Hohhot, Inner Mongolia 010000 (CN)**
• **YE, Wenhui**
**Hohhot, Inner Mongolia 010000 (CN)**
• **ZHOU, Mingqiao**
**Hohhot, Inner Mongolia 010000 (CN)**

(74) Representative: **Boult Wade Tennant LLP**
**Salisbury Square House
8 Salisbury Square
London EC4Y 8AP (GB)**

(54) **METHOD FOR IMPROVING DIGESTION PERFORMANCE FOR PROTEIN IN FOOD, AND PROTEIN COMPOSITION AND FOOD CONTAINING SAME**

(57)    A method for improving digestion performance for proteins in food, and a protein composition and food containing same. According to the method, the content of α-lactalbumin in food is controlled to be 10.5% to 51.0%, and the content of β-casein is controlled to be 10.0% to 40.0%. Said contents are calculated on the basis that the total protein content in the food is 100%.

EP 4 470 383 A1

**Description**

Technical Field

The present invention relates to a method for improving digestion performance for proteins in food, and a protein composition and food containing same, and belongs to the technical field of formula milk powder.

Background Art

Among the three major energy-providing nutrients, protein has attracted widespread attention due to its important roles in mammalian cubs, such as providing energy, promoting height, inhibiting bacteria and anti-infection, and promoting mineral absorption.

The huge difference in protein composition between cow's milk and human milk shows different physiological characteristics and growth patterns of different species, and the nutritional value brought thereby is also different.

Generally, proteins in food can only be absorbed after being hydrolyzed into amino acids and short peptides. Since saliva does not contain enzymes that hydrolyze proteins, digestion of proteins begins in the stomach but mainly occurs in the small intestine. The enzyme that digests proteins in the stomach is pepsin, which breaks down proteins into peptones and a small amount of polypeptides and amino acids, and functions at an optimal pH value of 1.8-3.5. Pepsin has a curding effect on casein, and the formed curd has a long residence time in the stomach, which facilitates digestion and absorption. This effect is very important for infants. The digestion of proteins in the small intestine is mainly completed by various proteases (such as trypsin) secreted by pancreas, which proteases can quickly degrade the proteins in the small intestine into amino acids and short peptides that can be absorbed by small intestinal epithelial cells.

It is generally believed that casein will agglomerate in the stomach, resulting in a long residence time in the stomach, thereby prolonging the gastric emptying time and the time for the digestion and absorption of proteins. The combined action of the strongly acidic environment in the stomach and digestive enzymes destroys the casein micelles, which casein re-interacts with acid and pepsin to form curd. The size of the curd can be reduced by increasing the proportion of $\beta$-casein. Whereas because the spatial structure of whey protein is not easily destroyed in the stomach, existing studies have reported that whey protein is not easily digested in the stomach, and can be completely degraded into free amino acids only after entering the small intestine, and the free amino acids are used by the body after absorption. There are differences in the spatial structures of $\alpha$-lactalbumin (also known as $\alpha$-lactoalbumin) and $\beta$-lactoglobulin, wherein $\alpha$-lactalbumin is more likely to form a loose structure in the presence of gastric acid. Therefore, whether the digestibility can be improved by increasing the proportion of $\alpha$-lactalbumin is a question worth discussing.

Although proteins have the above-mentioned advantages and digestive properties, the digestion performance of protein-containing foods such as ordinary infant formula milk powder is still not as good as breast milk during digestion by infants, which needs to be improved urgently.

Summary of the Invention

To solve the above-mentioned technical problem, an objective of the present invention is to provide a method for improving digestion performance for proteins in food, so that the digestion performance for proteins is good by controlling the composition and content range of the proteins in the food.

In order to achieve the above-mentioned objective, the present invention firstly provides a method for improving digestion performance for proteins in food, wherein according to the method, the content of $\alpha$-lactalbumin in food is controlled to be about 10.5% to 51.0%, and the content of $\beta$-casein is controlled to be about 10.0% to 40.0%, the above contents being calculated on the basis that the total protein content in the food is 100%.

According to a particular embodiment of the present invention, preferably, the content of $\alpha$-lactalbumin is controlled to be about 15.0% to 51.0%.

According to a particular embodiment of the present invention, preferably, the content of $\beta$-casein is controlled to be about 12.0% to 40.0%, more preferably about 15.0% to 40.0%.

According to a particular embodiment of the present invention, preferably, the method further comprises: controlling the content of $\alpha$-lactalbumin in food to be about 15.0% to 32.0%, and controlling the content of $\beta$-casein to be about 20.0% to 32.0%, wherein the above contents are calculated on the basis that the total protein content in the food is 100%.

According to a particular embodiment of the present invention, preferably, according to the method, the content of $\alpha$-lactalbumin in food is controlled to be about 21.0% to 32.0%, and the content of $\beta$-casein is controlled to be about 26.0% to 32.0%, wherein the above contents are calculated on the basis that the total protein content in the food is 100%.

According to a particular embodiment of the present invention, preferably, according to the method, the content of $\alpha$-lactalbumin in food is controlled to be about 21.0% to 32.0%, and the content of $\beta$-casein is controlled to be about 29.0% to 32.0%, wherein the above contents are calculated on the basis that the total protein content in the food is 100%.

According to a particular embodiment of the present invention, preferably, the method further comprises: controlling the content of whey protein in food to be about 30.0% or more, e.g., 35.0% to 90.0%, preferably about 35.0% to 70.0%, more preferably about 40.0% to 70.0%, and further preferably about 55.0% to 65.0%, wherein the above contents are calculated on the basis that the total protein content in the food is 100%.

According to a particular embodiment of the present invention, preferably, the method further comprises: controlling the content of casein in food to be about 10.0% or more, e.g., 10.0% to 65.0%, preferably about 30.0% to 65.0%, more preferably about 30.0% to 60.0%, and further preferably about 35.0% to 45.0%, wherein the above contents are calculated on the basis that the total protein content in the food is 100%.

According to a particular embodiment of the present invention, the content of whey protein and the content of casein in food can be controlled simultaneously. Preferably, the content of whey protein in food is controlled to be about 35.0% to 70.0%, and the content of casein is controlled to be about 30.0% to 65.0%, e.g., 60.0% and 40.0%, 35.0% and 65.0%, 50.0% and 50.0%, and 70.0% and 30.0%, wherein the above contents are calculated on the basis that the total protein content in the food is 100%.

According to a particular embodiment of the present invention, preferably, according to the method, the content of whey protein in food is controlled to be about 55.0% to 65.0%, the content of casein is controlled to be about 35.0% to 45.0%, and:

the content of α-lactalbumin in food is controlled to be about 32.0% and the content of β-casein is controlled to be about 32.0%, or, the content of α-lactalbumin in food is controlled to be about 29.0% and the content of β-casein is controlled to be about 32.0%, or, the content of α-lactalbumin in food is controlled to be about 21.5% and the content of β-casein is controlled to be about 29.0%, the content of α-lactalbumin in food is controlled to be about 21.0% and the content of β-casein is controlled to be about 26.0%, wherein the above contents are calculated on the basis that the total protein content in the food is 100%.

The method provided by the present invention can significantly improve the digestion performance for proteins (especially whey protein) in food by controlling the content of α-lactalbumin (proportion to total protein) and the content of β-casein (proportion to total protein) in food.

According to a particular embodiment of the present invention, the improving digestion performance for proteins refers to improving digestion performance for proteins of animal origin, such as proteins derived from animal milk, especially proteins derived from cow's milk.

According to a particular embodiment of the present invention, preferably, the improving digestion performance for proteins in food comprises at least one of: improving the digestibility of whey protein, increasing the number of types of free amino acids released, improving the proportion of essential amino acids (EAA) released among the free amino acids released, increasing the production of small-molecule peptides produced, and increasing the number of types of characteristic peptides produced, particularly improving the proportion of essential amino acids (EAA) released among the free amino acids released.

According to a particular embodiment of the present invention, divided by applicable population, the food can be an adult food, a children's food or an infant food; and divided by type, the food can be a milk powder or a liquid milk, e.g., an adult milk powder, a children's milk powder, and an infant formula milk powder.

The present invention further provides a protein composition, wherein on the basis that the total protein content in the protein composition is 100%, the protein composition contains about 10.5% to 51.0% of α-lactalbumin and about 10.0% to 40.0% of β-casein. The protein composition is a composition that can improve digestion performance for proteins in food, and can be used to implement the method for improving digestion performance for proteins in food provided by the present invention, and the protein composition is used as a component in combination with other ingredients to obtain a food.

According to a particular embodiment of the present invention, preferably, on the basis that the total protein content in the protein composition is 100%, the protein composition contains about 15.0% to 51.0% of α-lactalbumin.

According to a particular embodiment of the present invention, preferably, on the basis that the total protein content in the protein composition is 100%, the protein composition contains about 12.0% to 40.0% of β-casein, more preferably about 15.0% to 40.0%, and further preferably about 20.0% to 32.0%.

According to a particular embodiment of the present invention, preferably, on the basis that the total protein content in the protein composition is 100%, the protein composition contains about 21.0% to 32.0% of α-lactalbumin and about 26.0% to 32.0% of β-casein.

According to a particular embodiment of the present invention, preferably, on the basis that the total protein content in the protein composition is 100%, the protein composition contains about 21.0% to 32.0% of α-lactalbumin and about 29.0% to 32.0% of β-casein. For example, on the basis that the total protein content in the protein composition is 100%, the protein composition contains about 32.0% of α-lactalbumin and about 32.0% of β-casein, or, the protein composition contains about 29.0% of α-lactalbumin and about 32.0% of β-casein, or, the protein composition contains about 21.5% of α-lactalbumin and about 29.0% of β-casein, or, the protein composition contains about 21.0% of α-lactalbumin and about 26.0% of β-casein.

According to a particular embodiment of the present invention, preferably, on the basis that the total protein content in the protein composition is 100%, the content of whey protein in the protein composition is about 30.0% or more, e.g., 35.0% to 90.0%, preferably about 35.0% to 70.0%, more preferably about 40.0% to 70.0%, and further preferably about 55.0% to 65.0%.

According to a particular embodiment of the present invention, preferably, on the basis that the total protein content in the protein composition is 100%, the content of casein in the protein composition is controlled to be about 10.0% or more, e.g., 10.0% to 65.0%, preferably about 30.0% to 65.0%, more preferably about 30.0% to 60.0%, and further preferably about 35.0% to 45.0%.

According to a particular embodiment of the present invention, the content of whey protein and the content of casein in the protein composition can be controlled simultaneously. Preferably, the content of whey protein in the protein composition is controlled to be about 35.0% to 70.0%, and the content of casein is controlled to be about 30.0% to 65.0%, e.g., 60.0% and 40.0%, 35.0% and 65.0%, 50.0% and 50.0%, and 70.0% and 30.0%.

According to a particular embodiment of the present invention, preferably, the above-mentioned protein composition is prepared from raw materials comprising one or more of a liquid milk, a milk powder, a whey protein powder and a casein powder, wherein the above-mentioned raw materials can also be derived from a whey powder, lactoferrin, a protein hydrolysate, etc.; the liquid milk includes whole milk and/or skimmed milk; and the raw materials of the protein composition may further comprises lactose. The milk powder preferably includes whole milk powder (powdered whole milk) and/or skimmed milk powder (or powdered skimmed milk); the whey protein powder preferably includes concentrated whey protein powder with different contents of protein and whey protein powder with different contents of α-lactalbumin; and the casein powder preferably includes casein powder with different contents of β-casein. Milk powder, whey protein powder and casein powder, as the sources of protein, are added in an amount to meet the requirements for the content range of whey protein and the content range of casein. Whey protein powder and casein powder, used as the sources of α-lactalbumin and β-casein, respectively, are added in an amount to meet the requirements for the content of α-lactalbumin and the content of β-casein, respectively.

It should be noted that for the protein composition of the present invention, various raw materials can be pre-prepared into the composition, which is then added to a food as an ingredient, or various raw materials constituting the protein composition can be added to food separately.

According to a particular embodiment of the present invention, the protein composition of the present invention can be obtained by mixing various raw materials. Specifically, the method for preparing the protein composition of the present invention comprises mixing at least one of the following protein powders and/or milk powders:

(1) whey protein powder with an α-lactalbumin content of 25% to 55%, which can be referred to as whey protein powder with a low α-lactalbumin content;

(2) whey protein powder with an α-lactalbumin content of 75% to 95%, which can be referred to as whey protein powder with a high α-lactalbumin content;

(3) whey protein powder with an a β-casein content of 35% to 70%, which can be referred to as whey protein powder with a low β-casein content;

(4) whey protein powder with an a β-casein content of 40% to 80%, which can be referred to as whey protein powder with a high β-casein content;

(5) whey protein powder with a protein content of 60% to 95%; and (6) milk powder with a protein content of 15% to 50% (preferably, skimmed milk powder).

According to a particular embodiment of the present invention, preferably, the (1) whey protein powder with a low α-lactalbumin content used in the preparation process has an α-lactalbumin content of 30% to 50%, more preferably 35% to 45%, and further preferably 38% to 42%.

According to a particular embodiment of the present invention, preferably, the (2) whey protein powder with a high α-lactalbumin content used in the preparation process has an α-lactalbumin content of 80% to 95%, more preferably 85% to 95%, and further preferably 90% to 95%.

According to a particular embodiment of the present invention, preferably, the (3) whey protein powder with a low β-casein content used in the preparation process has a β-casein content of 40% to 65%, more preferably 45% to 60%, and further preferably 50% to 55%.

According to a particular embodiment of the present invention, preferably, the (4) whey protein powder with a high β-casein content used in the preparation process has a β-casein content of 45% to 80%, more preferably 50% to 75%, further preferably 55% to 70%, and still further preferably 60% to 65%.

According to a particular embodiment of the present invention, preferably, the (5) whey protein powder used in the preparation process has a protein content of 65% to 90%, more preferably 70% to 85%, and further preferably 75% to 80%.

According to a particular embodiment of the present invention, preferably, the (6) milk powder used in the preparation process has a protein content of 20% to 45% of milk powder, more preferably 25% to 40%, and further preferably 30% to 35%.

According to a particular embodiment of the present invention, the specific content ranges of the (1) whey protein powder with a low $\alpha$-lactalbumin content, the (2) whey protein powder with a high $\alpha$-lactalbumin content, the (3) whey protein powder with a low $\beta$-casein content, the (4) whey protein powder with a high $\beta$-casein content, the (5) whey protein powder, and the (6) milk powder listed above can be used in any combination, and are not limited to the combinations specifically listed above.

According to a particular embodiment of the present invention, preferably, the method for preparing the above-mentioned protein composition comprises mixing at least one of the following protein powders and/or milk powders:

whey protein powder with an $\alpha$-lactalbumin content of 41%, such as the product of Aria, Denmark;
whey protein powder with an $\alpha$-lactalbumin content of 92.3%, such as the product of Agropur, US;
whey protein powder with a $\beta$-casein content of 53%, such as the product of Kerry, Ireland;
whey protein powder with a $\beta$-casein content of 63.2%, such as the product of Aria, Denmark;
concentrated whey protein powder (WPC80) with a protein content of 80%, such as the product of Wheyco, Germany; and skimmed milk powder with a protein content of 33.5%, such as the product of Fonterra Co-Operative Group.

The present invention further provides a food, wherein the food contains the above-mentioned protein composition provided by the present invention to improve the digestion performance for the proteins contained therein, and on the basis that the total protein content in the food is 100%, the food contains about 10.5% to 51.0% of $\alpha$-lactalbumin and about 10.0% to 40.0% of $\beta$-casein.

According to a particular embodiment of the present invention, preferably, on the basis that the total protein content in the food is 100%, the food contains about 15.0% to 51.0% of $\alpha$-lactalbumin.

According to a particular embodiment of the present invention, preferably, on the basis that the total protein content in the food is 100%, the food contains about 12.0% to 40.0% of $\beta$-casein, more preferably about 15.0% to 40.0%, and further preferably about 20.0% to 32.0%.

According to a particular embodiment of the present invention, preferably, on the basis that the total protein content in the food is 100%, the food contains about 21.0% to 32.0% of $\alpha$-lactalbumin and about 26.0% to 32.0% of $\beta$-casein.

According to a particular embodiment of the present invention, preferably, the content of whey protein in the food is about 30.0% or more, e.g., 35.0% to 90.0%, preferably about 35.0% to 70.0%, more preferably about 40.0% to 70.0%, and further preferably about 55.0% to 65.0%, wherein the above contents are calculated on the basis that the total protein content in the food is 100%.

According to a particular embodiment of the present invention, preferably, the content of casein in the food is about 10.0% or more, e.g., 10.0% to 65.0%, preferably about 30.0% to 65.0%, more preferably about 30.0% to 60.0%, and further preferably about 35.0% to 45.0%.

According to a particular embodiment of the present invention, preferably, the content of whey protein and the content of casein in food can be controlled simultaneously. Preferably, the content of whey protein in food is controlled to be about 35.0% to 70.0%, and the content of casein is controlled to be about 30.0% to 65.0%, e.g., 60.0% and 40.0%, 35.0% and 65.0%, 50.0% and 50.0%, and 70.0% and 30.0%.

According to a particular embodiment of the present invention, preferably, the total protein content in the food is about 10.20-16.10 g/100 g, e.g., 10.20 g/100 g, 10.50 g/100 g, 11.00 g/100 g, 12.00 g/100 g, 13.00 g/100 g, 14.00 g/100 g, 15.00 g/100 g, 15.80 g/100 g, and 16.10 g/100 g, and the total protein content may also be within a range having the above-mentioned specific content as endpoints, e.g., 10.20-15.80 g/100 g, 10.20-15.00 g/100 g, 10.20-14.00 g/100 g, 10.20-13.00 g/100 g, 10.20-12.00 g/100 g, 10.20-11.00 g/100 g, 10.20-10.50 g/100 g, 10.50-16.10 g/100 g, 10.50-15.80 g/100 g, 10.50-15.00 g/100 g, 10.50-14.00 g/100 g, 10.50-13.00 g/100 g, 10.50-12.00 g/100 g, 10.50-11.00 g/100 g, 11.00-16.10 g/100 g, 11.00-15.80 g/100 g, 11.00-15.00 g/100 g, 11.00-14.00 g/100 g, 11.00-13.00 g/100 g, 11.00-12.00 g/100 g, 12.00-16.10 g/100 g, 12.00-15.80 g/100 g, 12.00-15.00 g/100 g, 12.00-14.00 g/100 g, 12.00-13.00 g/100 g, 13.00-16.10 g/100 g, 13.00-15.80 g/100 g, 13.00-15.00 g/100 g, 13.00-14.00 g/100 g, 14.00-16.10 g/100 g, 14.00-15.80 g/100 g, 14.00-15.00 g/100 g, 15.00-16.10 g/100 g, 15.00-15.80 g/100 g, and 15.80-16.10 g/100 g.

According to a particular embodiment of the present invention, preferably, the content of $\alpha$-lactalbumin in the food is about 1.50 to 5.30 g/100 g, and the content of $\beta$-casein is about 2.00 to 5.20 g/100 g.

According to a particular embodiment of the present invention, the food may contain different contents of $\alpha$-lactalbumin and $\beta$-casein, wherein the content of $\alpha$-lactalbumin may be 1.50 g/100 g, 2.00 g/100 g, 2.20 g/100 g, 2.40 g/100 g, 3.00 g/100 g, 3.30 g/100 g, 4.00 g/100 g, 4.60 g/100 g, 5.00 g/100 g, or 5.30 g/100 g; the content of $\alpha$-lactalbumin may also be within a range having the above-mentioned specific contents in combination as endpoints, e.g., 1.50-2.00 g/100 g, 1.50-2.20 g/100 g, 1.50-2.40 g/100 g, 1.50-3.00 g/100 g, 1.50-3.30 g/100 g, 1.50-4.00 g/100 g, 1.50-4.60 g/100 g, 1.50-5.00 g/100 g, 1.50-5.30 g/100 g, 2.00-2.20 g/100 g, 2.00-2.40 g/100 g, 2.00-3.00 g/100 g, 2.00-3.30 g/100 g, 2.00-4.00 g/100 g, 2.00-4.60 g/100 g, 2.00-5.00 g/100 g, 2.00-5.30 g/100 g, 2.20-2.40 g/100 g, 2.20-3.00 g/100 g, 2.20-3.30 g/100 g, 2.20-4.00 g/100 g, 2.20-4.60 g/100 g, 2.20-5.00 g/100 g, 2.20-5.30 g/100 g, 2.40-3.00 g/100 g, 2.40-3.30 g/100 g, 2.40-4.00 g/100 g, 2.40-4.60 g/100 g, 2.40-5.00 g/100 g, 2.40-5.30 g/100 g, 3.00-3.30 g/100 g, 3.00-4.00 g/100 g, 3.30-4.60 g/100 g, 3.30-5.00 g/100 g, 3.30-5.30 g/100 g, 4.00-4.60 g/100 g, 4.00-5.00 g/100 g, 4.00-5.30 g/100 g, 4.60-5.00 g/100 g, 4.60-5.30 g/100 g, and 5.00-5.30 g/100 g; the content of β-casein may be 2.00 g/100 g, 2.50 g/100 g, 3.00 g/100 g, 3.50 g/100 g, 4.00 g/100 g, 4.50 g/100 g, 5.00 g/100 g, or 5.20 g/100 g; and the content of β-casein may also be within a range having the above-mentioned specific contents in combination as endpoints, e.g., 2.00-2.50 g/100 g, 2.00-3.00 g/100 g, 2.00-3.50 g/100 g, 2.00-4.00 g/100 g, 2.00-4.50 g/100 g, 2.00-5.00 g/100 g, 2.00-5.20 g/100 g, 2.50-3.00 g/100 g, 2.50-3.50 g/100 g, 2.50-4.00 g/100 g, 2.50-4.50 g/100 g, 2.50-5.00 g/100 g, 2.50-5.20 g/100 g, 3.00-3.50 g/100 g, 3.00-4.00 g/100 g, 3.00-4.50 g/100 g, 3.00-5.00 g/100 g, 3.00-5.20 g/100 g, 3.50-4.00 g/100 g, 3.50-4.50 g/100 g, 3.50-5.00 g/100 g, 3.50-5.20 g/100 g, 4.00-4.50 g/100 g, 4.00-5.00 g/100 g, 4.00-5.20 g/100 g, 4.50-5.00 g/100 g, 4.50-5.20 g/100 g, and 5.00-5.20 g/100 g.

The above-mentioned contents of α-lactalbumin and β-casein can be combined or comprise other specific combinations, for example: the content of α-lactalbumin is 2.38 g/100 g, and the content of β-casein is 3.20 g/100 g; or, the content of α-lactalbumin is 3.343 g/100 g, and the content of β-casein is 4.13 g/100 g; or, the content of α-lactalbumin is 3.43 g/100 g, and the content of β-casein is 4.61 g/100 g; or, the content of α-lactalbumin is 4.642 g/100 g, and the content of β-casein is 5.122 g/100 g; or, the content of α-lactalbumin is 5.117 g/100 g, and the content of β-casein is 5.127 g/100 g; or, the content of α-lactalbumin is 1.795 g/100 g, and the content of β-casein is 2.386 g/100 g; or, the content of α-lactalbumin is 2.224 g/100 g, and the content of β-casein is 3.036 g/100 g; or, the content of α-lactalbumin is 1.572 g/100 g, and the content of β-casein is 2.102 g/100 g; or, the content of α-lactalbumin is 2.208 g/100 g, and the content of β-casein is 3.027 g/100 g; or, the content of α-lactalbumin is 3.355 g/100 g, and the content of β-casein is 3.363 g/100 g; or, the content of α-lactalbumin is 1.585 g/100 g, and the content of β-casein is 2.097 g/100 g; or, the content of α-lactalbumin is 5.264 g/100 g, the content of β-casein is 2.108 g/100 g, etc.

According to a particular embodiment of the present invention, divided by applicable population, the food can be an adult food, a children's food or an infant food; and divided by type, the food can be a milk powder or a liquid milk, e.g., an adult milk powder, a children's milk powder, and an infant formula milk powder.

According to a particular embodiment of the present invention, in the method for improving digestion performance for proteins in food, the protein composition or the food mentioned above, on the basis that the total protein content is 100%, the contents of α-lactalbumin and β-casein can be controlled within different ranges, wherein the content range of α-lactalbumin is c% to 51.0%, and the content range of β-casein is d% to 40.0%, and the content ranges of α-lactalbumin and β-casein can be selected separately or synergistically (i.e., the content range of α-lactalbumin is a% to 51.0%, and the content range of β-casein is b% to 40.0%), wherein c is any value between 10.5 and 51.0, preferably an integer, i.e., the content range of α-lactalbumin may be 11.0% to 51.0%, 13.0% to 51.0%, 15.0% to 51.0%, 17.0% to 51.0%, 19.0% to 51.0%, 21.0% to 51.0%, 23.0% to 51.0%, 25.0% to 51.0%, 27.0% to 51.0%, 29.0% to 51.0%, 31.0% to 51.0%, 33.0% to 51.0%, 35.0% to 51.0%, 37.0% to 51.0%, 39.0% to 51.0%, 41.0% to 51.0%, 43.0% to 51.0%, 45.0% to 51.0%, 47.0% to 51.0%, 49.0% to 51.0%, etc.; and d is any value between 10.0 and 40.0, preferably an integer, i.e., the content range of β-casein may be 11.0% to 40.0%, 13.0% to 40.0%, 15.0% to 40.0%, 17.0% to 40.0%, 19.0% to 40.0%, 21.0% to 40.0%, 23.0% to 40.0%, 25.0% to 40.0%, 27.0% to 40.0%, 29.0% to 40.0%, 31.0% to 40.0%, 33.0% to 40.0%, 35.0% to 40.0%, 37.0% to 40.0%, 39.0% to 40.0%, etc. The above-mentioned content ranges of α-lactalbumin and β-casein can be combined or include a numerical range within the above-mentioned ranges, for example, on the basis that the total protein content in the food/protein composition is 100%, the food/protein composition contains 15.0% to 32.0% of α-lactalbumin, and simultaneously contains 26.0% to 32.0% of β-casein, or, the food/protein composition contains 15.0% to 32.0% of α-lactalbumin, and simultaneously contains 29.0% to 32.0% of β-casein, or, the food/protein composition contains 16.0% to 32.0% of α-lactalbumin, and simultaneously contains 20.0% to 32.0% of β-casein, or, the food/protein composition contains 16.0% to 32.0% of α-lactalbumin, and simultaneously contains 26.0% to 32.0% of β-casein, or, the protein composition contains 16.0% to 32.0% of α-lactalbumin, and simultaneously contains 29.0% to 32.0% of β-casein, or, the food/protein composition contains 21.0% to 32.0% of α-lactalbumin, and simultaneously contains 20.0% to 32.0% of β-casein, or, the food/protein composition contains 21.0% to 32.0% of α-lactalbumin, and simultaneously contains 26.0% to 32.0% of β-casein, or, the food/protein composition contains 21.0% to 32.0% of α-lactalbumin, and simultaneously contains 29.0% to 32.0% of β-casein, or, the food/protein composition contains 29.0% to 32.0% of α-lactalbumin, and simultaneously contains 20.0% to 32.0% of β-casein, or, the food/protein composition contains 29.0% to 32.0% of α-lactalbumin, and simultaneously contains 26.0% to 32.0% of β-casein, or, the food/protein composition contains 29.0% to 32.0% of α-lactalbumin, and simultaneously contains 29.0% to 32.0% of β-casein, or, the food/protein composition contains 29.0% to 32.0% of α-lactalbumin, and simultaneously contains 32.0% of β-casein. In addition to α-lactalbumin and β-casein, the above-mentioned food/protein composition further contains other types of proteins.

According to a particular embodiment of the present invention, in the method for improving digestion performance for proteins in food, the protein composition or the food mentioned above, on the basis that the total protein content is 100%, the contents of whey protein and casein can be controlled within different ranges: preferably, the content of whey protein in the food/protein composition is controlled to be 55.0% to 90.0%, and the content of casein is controlled to be 10.0% to 45.0%; more preferably, the content of whey protein in the food/protein composition is controlled to be 55.0% to 80.0%, and the content of casein is controlled to be 20.0% to 45.0%; further preferably, the content of whey protein in the food/protein composition is controlled to be 55.0% to 70.0%, and the content of casein is controlled to be 30.0% to 45.0%; and further preferably, the content of whey protein in the food/protein composition is controlled to be 55.0% to 65.0%, and the content of casein is controlled to be 35.0% to 45.0%. The sum of the contents of whey protein and casein is not required to be 100%.

The technical solution of the present invention has the following beneficial effects:

(1) With the technical solution of the present invention, the digestion performance for whey protein in food, especially in infant formula milk powder can be significantly improved. (2) With the technical solution of the present invention, more types of free amino acids can be released. (3) With the technical solution of the present invention, the proportion of essential amino acids (EAA) released can improved. (4) With the technical solution of the present invention, more small molecule peptides can be produced during the digestion process. (5) With the technical solution of the present invention, more characteristic peptide fragments can be produced.

Brief Description of the Drawings

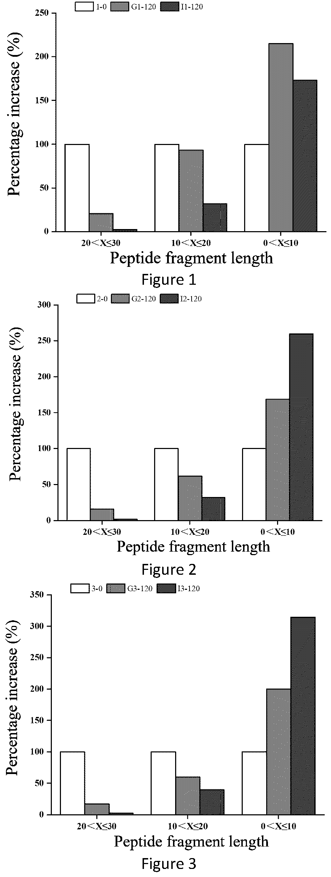

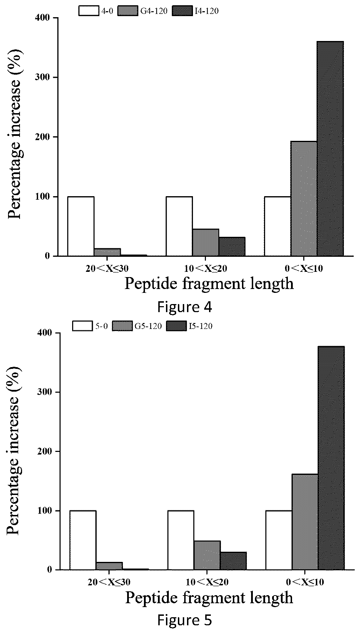

FIG. 1-FIG. 6 respectively show the results of the release of small molecule peptides from the samples of the protein compositions of Examples 1-5 and Comparative example 1 in an in-vitro gastric digestion experiment.

Detailed Description of Embodiments

In order to understand the technical features, object and beneficial effects of the present invention more clearly, then the technical solution of the present invention is described in detail as below, but it cannot be construed as a limitation for the implementable scope of the present invention.

Description of raw materials for the examples and comparative examples:

The skimmed milk powder with a protein content of 33.5% was produced by Fonterra Co-Operative Group.

WPC80 was a concentrated whey protein powder with a protein content of 80%, and purchased from Wheyco, Germany.

The whey protein powder with a low $\alpha$-lactalbumin content had an $\alpha$-lactalbumin content of 41%, and was purchased from Aria, Denmark.

The whey protein powder with a high $\alpha$-lactalbumin content had an $\alpha$-lactalbumin content of 92.3%, and was purchased from Agropur, US.

The whey protein powder with a low $\beta$-casein content had a $\beta$-casein content of 53%, and was purchased from Kerry, Ireland.

The whey protein powder with a high $\beta$-casein content had a $\beta$-casein content of 63.2%, and was purchased from Aria, Denmark.

Lactose was purchased from Glanbia, US.

Example 1

This example provides a protein composition (sample 1), the raw materials of which comprises (by weight):

| | |
|---|---|
| skimmed milk powder | 35 parts |
| WPC80 | 62 parts |
| whey protein powder with a low $\alpha$-lactalbumin content | 18 parts |
| whey protein powder with a low $\beta$-casein content | 42 parts |
| lactose | 523 parts. |

The protein composition provided by this example has a whey protein content of 60% and a casein content of 40% (on the basis that the total protein content is 100%). The total protein content, the content and proportion of $\alpha$-lactalbumin, the content and proportion of $\beta$-casein, etc. are as shown in Table 1.

Example 2

This example provides a protein composition (sample 2), the raw materials of which comprises (by weight):

| | |
|---|---|
| skimmed milk powder | 58 parts |
| WPC80 | 30 parts |
| whey protein powder with a low α-lactalbumin content | 49 parts |
| whey protein powder with a high β-casein content | 28.2 parts |
| lactose | 510 parts. |

The protein composition provided by this example has a whey protein content of 60% and a casein content of 40% (on the basis that the total protein content is 100%). The total protein content, the content and proportion of α-lactalbumin, the content and proportion of β-casein, etc. are as shown in Table 1.

Example 3

This example provides a protein composition (sample 3), the raw materials of which comprises (by weight):

| | |
|---|---|
| skimmed milk powder | 38 parts |
| WPC80 | 29 parts |
| whey protein powder with a low α-lactalbumin content | 51.2 parts |
| whey protein powder with a high β-casein content | 34.6 parts |
| lactose | 523 parts. |

The protein composition provided by this example has a whey protein content of 60% and a casein content of 40% (on the basis that the total protein content is 100%). The total protein content, the content and proportion of α-lactalbumin, the content and proportion of β-casein, etc. are as shown in Table 1.

Example 4

This example provides a protein composition (sample 4), the raw materials of which comprises (by weight):

| | |
|---|---|
| skimmed milk powder | 14 parts |
| whey protein powder with a low α-lactalbumin content | 80.5 parts |
| whey protein powder with a high α-lactalbumin content | 2.1 parts |
| whey protein powder with a high β-casein content | 41.5 parts |
| lactose | 536 parts. |

The protein composition provided by this example has a whey protein content of 60% and a casein content of 40% (on the basis that the total protein content is 100%). The total protein content, the content and proportion of α-lactalbumin, the content and proportion of β-casein, etc. are as shown in Table 1.

Example 5

This example provides a protein composition (sample 5), the raw materials of which comprises (by weight):

| | |
|---|---|
| skimmed milk powder | 14 parts |
| whey protein powder with a low α-lactalbumin content | 71 parts |
| whey protein powder with a high α-lactalbumin content | 10 parts |
| whey protein powder with a high β-casein content | 41.5 parts |
| lactose | 537 parts. |

The protein composition provided by this example has a whey protein content of 60% and a casein content of 40% (on the basis that the total protein content is 100%). The total protein content, the content and proportion of α-lactalbumin, the content and proportion of β-casein, etc. are as shown in Table 1.

Comparative example 1

This comparative example provides a protein composition (sample 6), the raw materials of which comprises (by weight):

| | |
|---|---|
| skimmed milk powder | 160 parts |
| WPC80 | 70 parts |
| lactose | 450 parts. |

The protein composition provided by this comparative example has a whey protein content of 60% and a casein content of 40% (on the basis that the total protein content is 100%). The total protein content, the content and proportion of α-lactalbumin, the content and proportion of β-casein, etc. are as shown in Table 1.

Example 6

This example provides a protein composition (sample 7), the raw materials of which comprises (by weight):

| | |
|---|---|
| skimmed milk powder | 230 parts |
| whey protein powder with a high α-lactalbumin content | 16.5 parts |
| lactose | 300 parts. |

The protein composition provided by this example has a whey protein content of 35% and a casein content of 65% (on the basis that the total protein content is 100%). The total protein content, the content and proportion of α-lactalbumin, the content and proportion of β-casein, etc. are as shown in Table 1.

Example 7

This example provides a protein composition (sample 8), the raw materials of which comprises (by weight):

| | |
|---|---|
| skimmed milk powder | 210 parts |
| WPC80 | 2 parts |
| whey protein powder with a high α-lactalbumin content | 24 parts |
| whey protein powder with a high β-casein content | 15 parts |
| lactose | 420 parts. |

The protein composition provided by this example has a whey protein content of 35% and a casein content of 65% (on the basis that the total protein content is 100%). The total protein content, the content and proportion of α-lactalbumin, the content and proportion of β-casein, etc. are as shown in Table 1.

Comparative example 2

This comparative example provides a protein composition (sample 9), the ingredients of which comprises (by weight):

| | |
|---|---|
| skimmed milk powder | 262 parts |
| WPC80 | 26 parts |
| lactose | 383.5 parts. |

The protein composition provided by this comparative example has a whey protein content of 35% and a casein content of 65% (on the basis that the total protein content is 100%). The total protein content, the content and proportion of $\alpha$-lactalbumin, the content and proportion of $\beta$-casein, etc. are as shown in Table 1.

Example 8

This example provides a protein composition (sample 10), the raw materials of which comprises (by weight):

| | |
|---|---|
| skimmed milk powder | 180 parts |
| WPC80 | 41.7 parts |
| whey protein powder with a high $\alpha$-lactalbumin content | 10.2 parts |
| whey protein powder with a high $\beta$-casein content | 6.2 parts |
| lactose | 435 parts. |

The protein composition provided by this example has a whey protein content of 50% and a casein content of 50% (on the basis that the total protein content is 100%). The total protein content, the content and proportion of $\alpha$-lactalbumin, the content and proportion of $\beta$-casein, etc. are as shown in Table 1.

Example 9

This example provides a protein composition (sample 11), the raw materials of which comprises (by weight):

| | |
|---|---|
| skimmed milk powder | 102 parts |
| WPC80 | 38 parts |
| whey protein powder with a high $\alpha$-lactalbumin content | 19 parts |
| whey protein powder with a high $\beta$-casein content | 28 parts |
| lactose | 488 parts. |

The protein composition provided by this example has a whey protein content of 50% and a casein content of 50% (on the basis that the total protein content is 100%). The total protein content, the content and proportion of $\alpha$-lactalbumin, the content and proportion of $\beta$-casein, etc. are as shown in Table 1.

Example 10

This example provides a protein composition (sample 12), the raw materials of which comprises (by weight):

| | |
|---|---|
| skimmed milk powder | 72.2 parts |
| WPC80 | 20.3 parts |
| whey protein powder with a high $\alpha$-lactalbumin content | 36.3 parts |
| whey protein powder with a high $\beta$-casein content | 36.1 parts |
| lactose | 511 parts. |

The protein composition provided by this example has a whey protein content of 50% and a casein content of 50% (on the basis that the total protein content is 100%). The total protein content, the content and proportion of $\alpha$-lactalbumin, the content and proportion of $\beta$-casein, etc. are as shown in Table 1.

Comparative example 3

This comparative example provides a protein composition (sample 13), the raw materials of which comprises (by weight):

| | |
|---|---|
| skimmed milk powder | 202 parts |
| WPC80 | 52 parts |
| lactose | 418 parts. |

The protein composition provided by this comparative example has a whey protein content of 50% and a casein content of 50% (on the basis that the total protein content is 100%). The total protein content, the content and proportion of $\alpha$-lactalbumin, the content and proportion of $\beta$-casein, etc. are as shown in Table 1.

Example 11

This example provides a protein composition (sample 14), the raw materials of which comprises (by weight):

| | |
|---|---|
| skimmed milk powder | 38.5 parts |
| WPC80 | 88.5 parts |
| whey protein powder with a high $\alpha$-lactalbumin content | 4.1 parts |
| whey protein powder with a high $\beta$-casein content | 23.3 parts |
| lactose | 525 parts. |

The protein composition provided by this example has a whey protein content of 70% and a casein content of 30% (on the basis that the total protein content is 100%). The total protein content, the content and proportion of $\alpha$-lactalbumin, the content and proportion of $\beta$-casein, etc. are as shown in Table 1.

Example 12

This example provides a protein composition (sample 15), the raw materials of which comprises (by weight):

| | |
|---|---|
| skimmed milk powder | 38 parts |
| WPC80 | 21 parts |
| whey protein powder with a high $\alpha$-lactalbumin content | 61 parts |
| whey protein powder with a high $\beta$-casein content | 23.5 parts |
| lactose | 533 parts. |

The protein composition provided by this example has a whey protein content of 70% and a casein content of 30% (on the basis that the total protein content is 100%). The total protein content, the content and proportion of $\alpha$-lactalbumin, the content and proportion of $\beta$-casein, etc. are as shown in Table 1.

Comparative example 4

This comparative example provides a protein composition (sample 16), the raw materials of which comprises (by weight):

| | |
|---|---|
| skimmed milk powder | 121 parts |
| WPC80 | 86.5 parts |
| lactose | 525 parts. |

The protein composition provided by this comparative example has a whey protein content of 70% and a casein content of 30% (on the basis that the total protein content is 100%). The total protein content, the content and proportion of $\alpha$-lactalbumin, the content and proportion of $\beta$-casein, etc. are as shown in Table 1.

Example 13

This example provides an infant formula milk powder containing a protein composition of $\alpha$-lactalbumin and $\beta$-casein; the infant formula milk powder comprises, by weight: 120 parts of raw cow's milk; 6 parts of whey protein powder; 30 parts of lactose; 23 parts of edible vegetable blend oil, comprising 13.8 parts of structured lipid OPO; 4 parts of $\alpha$-lactalbumin powder; 4 parts of casein; 4 parts of galacto-oligosaccharide; 2 parts of fructo-oligosaccharide; 1.2 parts of minerals; 0.35 parts of compound vitamins; 0.15 parts of choline chloride; 1.5 parts of docosahexaenoic acid; and 1.6 parts of arachidonic acid; wherein on the basis that the total protein content in the formula milk powder is 100%, the content of $\alpha$-lactalbumin is 18%, and the content of $\beta$-casein is 22%.

Example 14

This example provides a formula milk powder for pregnant women containing a protein composition of α-lactalbumin and β-casein; the formula milk powder comprises, by weight: 6 parts of powdered skimmed milk; 3 parts of whey protein powder (WPC 80); 50 parts of lactose; 26 parts of edible vegetable blend oil; 5 parts of α-lactalbumin powder; 3 parts of casein; 4 parts of galacto-oligosaccharide; 2 parts of fructo-oligosaccharide; 12 parts of minerals; 0.35 parts of compound vitamins; 0.15 parts of choline chloride; 1 part of docosahexaenoic acid; and 0.16 parts of arachidonic acid; wherein on the basis that the total protein content in the formula milk powder is 100%, the content of α-lactalbumin is 21%, and the content of β-casein is 26%.

Table 1

| | Sample No. | Whey protein: casein | Total protein content (g/100 g) | α-lactalbumin content (g/100 g) | β-casein content (g/100 g) | Whey protein/total protein (%) | Proportion of α-lactalbumin content (%) | Proportion of β-casein content (%) |
|---|---|---|---|---|---|---|---|---|
| Example 1 | Sample 1 | 60 : 40 | 15.82 | 2.38 | 3.20 | 60.00 | 15.0 | 20.2 |
| Example 2 | Sample 2 | | 15.87 | 3.343 | 4.13 | 60.61 | 21.1 | 26.0 |
| Example 3 | Sample 3 | | 15.92 | 3.43 | 4.61 | 60.03 | 21.5 | 29.0 |
| Example 4 | Sample 4 | | 16.06 | 4.642 | 5.122 | 60.06 | 28.9 | 31.9 |
| Example 5 | Sample 5 | | 16.06 | 5.117 | 5.127 | 60.03 | 31.9 | 31.9 |
| Comparative example 1 | Sample 6 | | 15.78 | 1.08 | 1.46 | 60.46 | 6.84 | 9.25 |
| Example 6 | Sample 7 | 35 : 65 | 10.22 | 1.795 | 2.386 | 33.3 | 17.6 | 23.4 |
| Example 7 | Sample 8 | | 10.53 | 2.224 | 3.036 | 34.9 | 21.1 | 28.8 |
| Comparative example 2 | Sample 9 | | 10.49 | 0.625 | 2.384 | 35.1 | 5.96 | 22.7 |
| Example 8 | Sample 10 | 50 : 50 | 10.51 | 1.572 | 2.102 | 50.0 | 15.0 | 20.0 |
| Example 9 | Sample 11 | | 10.51 | 2.208 | 3.027 | 50.0 | 21.0 | 28.8 |
| Example 10 | Sample 12 | | 10.51 | 3.355 | 3.363 | 50.2 | 31.9 | 32.0 |
| Comparative example 3 | Sample 13 | | 10.52 | 0.895 | 1.838 | 50.1 | 8.5 | 17.5 |
| Example 11 | Sample 14 | 70:30 | 10.51 | 1.585 | 2.097 | 69.9 | 15.1 | 20.0 |
| Example 12 | Sample 15 | | 10.50 | 5.264 | 2.108 | 69.8 | 50.1 | 20.1 |
| Comparative example 4 | Sample 16 | | 9.97 | 1.187 | 1.045 | 70.1 | 11.9 | 10.5 |

The samples provided by Examples 1-12 and Comparative examples 1-4 were evaluated for the digestion of proteins, including degradation of whey protein in the stomach, release of amino acids after digestion in the small intestine, production effects of peptides, etc., by simulating the process of gastric and small intestinal digestion in infants in vitro.

### I. In vitro gastric digestion experiment

### 1. Sample preparation and treatment

The method for performing in vitro simulated gastric digestion experiments on samples was implemented with reference to the Dupont method, with certain modifications, specifically as follows:

(1) preparation of milk sample: according to the protein content determination results, 50 mL of a milk sample was prepared by adjusting the sample to a concentration of 10 mg/mL with deionized water, HCl with a concentration of 1 mol/L was then added to adjust the pH value to 4.0, and the resulting milk sample was preheated in a water bath kettle at 37°C;

(2) preparation of simulated gastric juice: 4.33 mg of pepsin and 23.755 mg of gastric lipase were weighed, and added to 45 mL of a NaCl solution with a concentration of 0.15 M, the pH was adjusted to 4.0 with 1 M hydrochloric acid, and the volume was made up to 50 mL to obtain the simulated gastric juice, wherein in the system, the concentration of pepsin was 113.75 U/mL and the final concentration of gastric lipase was 21 U/mL;

(3) gastric digestion experiment process: in an enzyme reactor (37°C), 50 mL of the milk sample was added to 50 mL of the simulated gastric juice, 20 mL of sample was taken at 0 h and 3 h of digestion, respectively, and the pH of the sample taken was adjusted to 7.0 with 1 M NaOH to stop the reaction.

The samples of Examples 1-12 and Comparative examples 1-4 were all pre-treated according to the above-mentioned method to obtain the respective gastric digestive juice samples at different digestion times.

### 2. Semi-quantitative analysis of digestive juice

### (1) SDS-PAGE:

The samples taken at 0 h and 3 h were respectively diluted at 1 : 1 with deionized water, uniformly mixed with a 2× sample buffer (premixed protein sample buffer from Bio-rad) at 1 : 1, and then heated to boil. The sample loading volume was 5 μL.

The following electrophoresis and staining methods were used:

the concentration of separating gel was 12% (w/v), and the concentration of concentrating gel was 5% (w/v), with the specific formula as shown in Table 2; the electrophoresis process was performed at a constant voltage, with the voltage of the concentrating gel at 150 V and the voltage of the separating gel at 300 V; the staining agent was a 0.1% Coomassie brilliant blue R-250 solution, and the destaining agent was a mixed solution of ethanol and acetic acid; and after the gel electrophoresis was completed, the gel was gently taken down, the electrophoresis buffer was rinsed off, and the gel was stained with the Coomassie brilliant blue staining solution for 2 h on a horizontal shaker, and then destained with the destaining solution until the bands were clearly visible.

Table 2 Composition of SDS-PAGE gel

| Ingredient | 12% separating gel (mL) | 5% concentrating gel (mL) |
|---|---|---|
| Distilled water | 10.2 | 5.8 |
| 30% Acr-Bis (29:1) | 12.0 | 1.7 |
| Separating gel buffer (4×) | 7.5 | - |
| Concentrating gel buffer (4×) | - | 2.5 |
| 10% gel polymerization catalyst | 0.3 | 0.1 |
| TEMED | 0.012 | 0.01 |

(2) **Semi-quantitative analysis of change in protein content:** The electrophoretic bands of the gastric digestive juice samples of Examples 1-5 and Comparative example 1 were subjected to a semi-quantitative analysis for the trend of changes in relative milk protein content using Tanon Image electrophoresis image processing software, wherein the relative content of whey protein in the sample at 0 min was set to 100%, and the relative protein content at other time points was the ratio of the band area at this time point to that at 0 min.

## II. In vitro gastric and intestinal digestion experiments

### 1. Sample preparation and treatment

(1) preparation of milk sample: 50 ml of a milk sample was prepared by adjusting the sample to a concentration of 10 mg/mL with deionized water, HCl with a concentration of 1 mol/L was then added to adjust the pH value to 4.0, and the resulting milk sample was preheated in a water bath kettle at 37°C;

(2) preparation of simulated gastric juice: 4.33 mg of pepsin and 23.755 mg of gastric lipase were weighed, and added to 45 mL of a NaCl solution with a concentration of 0.15 M, the pH was adjusted to 4.0 with 1 M hydrochloric acid, and the volume was made up to 50 mL to obtain the simulated gastric juice, wherein in the system, the concentration of pepsin was 113.75 U/mL and the final concentration of gastric lipase was 21 U/mL;

(3) preparation of simulated intestinal juice: 0.324 mg of trypsin, 0.988 mg of chymotrypsin, 2.27 g of pancreatic lipase and 0.66 g of bile salt were weighed, and added to 245 mL of 0.15 M NaCl solution, the pH was adjusted to 6.5 with 1 M NaOH, and the volume was made up to 250 mL to obtain the simulated intestinal juice;

(4) gastrointestinal digestion experiment process: in an enzyme reactor (37°C), 25 mL of the milk sample was added to 25 mL of the simulated gastric juice for gastric digestion for 2 h, then the mixture was placed into the simulated intestinal juice for digestion, 20 mL of sample was taken at 0 h of digestion, 2 h of gastric digestion, 0.25 h of intestinal digestion, 1 h of intestinal digestion and 2 h of intestinal digestion, respectively, and the reaction of the sample taken was stopped with an enzyme preparation to obtain different digestive juice samples. Taking "1 h of intestinal digestion" as an example, it means that the sample was digested in the simulated gastric juice for 2 h and then digested in the simulated intestinal juice for another 1 h.

### 2. Determination of free amino acids

1 mL of digestive juice sample at each time point was taken and diluted with an equal volume of 10 g/100 mL TCA, and the diluted sample was shaken until uniform, subjected to an ultrasonic treatment for 30 min, and left to stand for 2 h or more; the samples were centrifuged at 10000 rpm for 30 min; after the supernatant was passed through a 0.45 $\mu$m membrane, 400 $\mu$L of the supernatant was taken and placed in a liquid-phase vial;

and the samples were analyzed for amino acid content by HPLC using a high-performance liquid chromatography system equipped with a sodium cation-exchange column for amino acid analysis (4×150 mm, Pickering, USA) and a phthaloyl post-column derivatization system (Pickering, USA).

Chromatographic conditions: Angilent Hypersil ODS column (5 $\mu$m, 4.0 mm×250 mm); column temperature: 40°C; mobile phase A (pH = 7.2): 27.6 mmol/L sodium acetate-triethylamine-tetrahydrofuran (volume ratio: 500 : 0.11 : 2.5), mobile phase B (pH = 7.2): 80.9 mmol/L sodium acetate-methanol-acetonitrile (volume ratio: 1 : 2 : 2); using gradient elution, elution procedure: 0 min, 8% B; 17 min, 50% B; 20.1 min, 100% B; and 24.0 min, 0% B; flow rate of the mobile phase: 1.0 mL/min; ultraviolet detector (VWD) detection wavelength: 338 nm, wherein proline was detected at 262 nm; and using an external standard method for preforming quantitative analysis of the amino acid content.

### 3. Determination of peptide fragments after digestion

The ultrafiltration tube was first centrifuged with PBS buffer at 5000 g for 20 min, and this step was repeated three times to achieve the purpose of cleaning; the collection tube was replaced, the sample was loaded into the ultrafiltration tube, and subjected to centrifugal ultrafiltration at 5000 g for 20 min, and the flow-through was collected; the ultrafiltration tube was then washed with 2-3 mL of PBS buffer, and the resulting solution was combined with the flow-through from step 3 and then dehumidified; and the dehumidified peptide fragments were desalted using an appropriate desalting column, and the resulting samples were detected using an Orbitrap Fusion™ Tribrid™ three-in-one mass spectrometer.

(1) High performance liquid chromatography: The dehumidified peptide fragment samples were redissolved in mobile phase A (2% ACN, 0.1% FA), and centrifuged at 20,000 g for 10 min, and then the supernatant was taken for sample injection. Separation was performed using UltiMate 3000 UHPLC from Thermo. The sample was first entered a trap column for enrichment and desalination, and then was separated by passing through a tandem self-packed C18 column (75 $\mu$m inner diameter, 3 $\mu$m column pack > particle size, 25 cm column length) at a flow rate of 300 nl/min with the following effective gradient: 0-5 min, 5% mobile phase B (98% ACN, 0.1% FA); 5-45 min, mobile phase B linearly increased from 5% to 25%; 45-50 min, mobile phase B increased from 25% to 35%; 50-52 min, mobile phase B increased from 35% to 80%; 52-54 min, 80% mobile phase B; and 54-60 min, 5% mobile phase B. The nanoliter liquid phase separation end was directly connected to the mass spectrometer.

(2) Mass spectrometry detection: The peptide fragments separated by liquid phase chromatography were ionized by a nanoESI source and then passed to a tandem Q-Exactive HF X mass spectrometer (Thermo Fisher Scientific, San Jose, CA) for DDA (data-dependent acquisition) mode detection. Main parameter settings were as follows: ion source voltage was set to 2 kV; first order mass spectrometry scanning range was 350-1500 m/z; resolution was set to 60000; second order mass spectrometry starting m/z was fixed at 100; and resolution was 15000. The parent ion screening conditions for second order fragmentation were: charge 2+ to 6+, and the top 30 parent ions with the peak intensity exceeding 10,000. The ion fragmentation mode was HCD, and the fragment ions were detected in Orbitrap. The dynamic exclusion time was set to 30 s. The AGC was set to: first order mass spectrometry 3E6, second order mass spectrometry 1E5.

(3) Data information analysis: The offline data were identified using the MaxQuant integrated Andromeda engine, and then MaxQuant performed quantitative analysis according to the information such as peptide fragment peak intensity, peak area and liquid chromatography retention time associated with first order mass spectrometry, and performed a series of statistical analyses and quality control. At the spectrum level, filtering was performed with PSM-level FDR <= 1%, and at the protein level, further filtering was performed with Peptide-level FDR <= 1% to obtain significant identification results. GO, COG, and Pathway functional annotations were then performed on the precursor proteins on the basis of the identification results. Based on the quantitative results, the differential peptide fragments between different comparison groups were calculated, and finally the functional analysis of the precursor proteins corresponding to the differentially enriched peptide fragments was performed.

**Experimental results and analysis:**

1. Digestion performance for whey protein

The data of the digestion performance for whey protein in the in vitro gastric digestion experiments of the samples of Examples 1-7, 9-10 and 12 and Comparative examples 1-4 are as shown in Table 3 and FIG. 1.

Table 3

| Gastric digestion-relative content of whey protein (%) | | | | | |
|---|---|---|---|---|---|
| | Example 1 | Example 2 | Example 3 | Example 4 | Example 5 | Comparative example 1 |
| Time | Sample 1 | Sample 2 | Sample 3 | Sample 4 | Sample 5 | Sample 6 |
| 0 h | 100.00 | 100.00 | 100.00 | 100.00 | 100.00 | 100.00 |
| 3 h | 81.00 | 86.99 | 71.56 | 86.38 | 53.04 | 91.84 |
| | Example 6 | Example 7 | Comparative example 2 | | | |
| Time | Sample 7 | Sample 8 | Sample 9 | | | |
| 0 h | 100.00 | 100.00 | 100.00 | | | |
| 3 h | 42.05 | 75.78 | 81.80 | | | |
| | Example 9 | Example 10 | Comparative example 3 | | | |
| Time | Sample 11 | Sample 12 | Sample 13 | | | |
| 0 h | 100.00 | 100.00 | 100.00 | | | |
| 3 h | 69.76 | 59.88 | 74.22 | | | |
| | Example 12 | Comparative example 4 | | | | |
| Time | Sample 15 | Sample 16 | | | | |
| 0 h | 100.00 | 100.00 | | | | |
| 3 h | 61.66 | 70.54 | | | | |

It can be seen from Table 3 that: during the in vitro gastric digestion process, the samples of Examples 1-7, 9-10 and 12 of the present invention all have a relatively low proportion of residual whey protein at different digestion time points as compared with the samples of Comparative examples 1-4, respectively, indicating that samples 1-5, 7-8, 11-12 and 15 have an increased digestion for whey protein in the stomach in vitro, that is, the protein compositions of Examples 1-7, 9-10 and 12 have a better digestion performance for whey protein than that of Comparative example 1, and especially the samples corresponding to Examples 5 and 6 have the most prominent effects.

2. Free amino acids

The types of free amino acids released in the in vitro gastric digestion experiments of the samples of the protein compositions of Examples 1-12 and Comparative examples 1-4 include Lys, Phe, Met, Trp, Thr, Ile, Leu, Val, His, Cys-s, Tyr, Asp, Glu, Ser, Gly, Arg, Ala, Pro, EAA, NEAA, TAA, etc., wherein Lys, Phe, Met, Trp, Thr, Ile, Leu, Val, His and EAA are essential amino acids.

3. Free essential amino acids (EAA)

The experimental data of the free essential amino acids (EAA) released in the in vitro gastrointestinal digestion experiments of the samples of Examples 1-12 and Comparative examples 1-4, i.e., the percentage of the free essential amino acids (EAA) to the total free amino acids, are as shown in Table 4, where

$$EAA\% = \text{free essential amino acids/total free amino acids} \times 100\%$$

Fold increase in EAA% after digestion = (EAA% after digestion - EAA% before digestion) ÷ EAA% before digestion

Table 4

|  | Sample no. | EAA (%) before digestion | EAA (%) after digestion | Fold increase in EAA% after digestion |
|---|---|---|---|---|
| Example 1 | Sample 1 | 26.54 | 59.47 | 1.24 |
| Example 2 | Sample 2 | 29.61 | 60.9 | 1.06 |
| Example 3 | Sample 3 | 30.57 | 60.05 | 0.96 |
| Example 4 | Sample 4 | 22.98 | 60.33 | 1.63 |
| Example 5 | Sample 5 | 33.2 | 62.48 | 0.88 |
| Comparative example 1 | Sample 6 | 32.46 | 58.94 | 0.82 |
| Example 6 | Sample 7 | 29.5 | 57.3 | 0.942 |
| Example 7 | Sample 8 | 28.1 | 53.3 | 0.897 |
| Comparative example 2 | Sample 9 | 32.9 | 55.7 | 0.698 |
| Example 8 | Sample 10 | 26.1 | 55.5 | 1.126 |
| Example 9 | Sample 11 | 27.7 | 54.3 | 0.96 |
| Example 10 | Sample 12 | 22.97 | 57.5 | 1.503 |
| Comparative example 3 | Sample 13 | 29.3 | 56.6 | 0.931 |
| Example 11 | Sample 14 | 21.0 | 55.6 | 1.648 |
| Example 12 | Sample 15 | 25.6 | 60.2 | 1.351 |
| Comparative example 4 | Sample 16 | 37.0 | 57.5 | 0.554 |

It can be seen from the data in Table 4 that: in the digestive juice obtained by in vitro gastrointestinal digestion, the protein compositions of Examples 1-12 have a larger fold increase in essential amino acids (EAA) released after digestion than the corresponding Comparative examples 1-4, indicating that the technical solution provided by the present invention can produce more beneficial essential amino acids during the digestion process.

4. Small molecule peptides (short peptides)

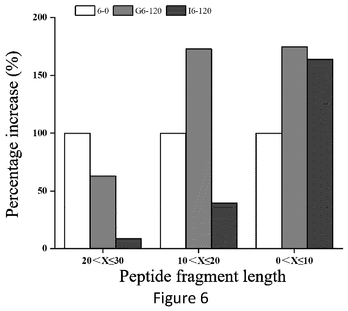

The data of the proportion of small molecule peptides released in the in vitro gastrointestinal digestion experiments of the samples of the protein compositions of Examples 1-5 and Comparative example 1 are as shown in Table 5 and FIG. 1-FIG. 6, wherein FIG. 1-FIG. 5 correspond to the samples of Examples 1-5, respectively, and FIG. 6 corresponds to the sample of Comparative example 1 as a control, where n-0 represents the data when sample n is not digested, Gn-120 represents the data when sample n is digested in simulated gastric juice for 120 min, In-120 represents the data when sample n is first digested in simulated gastric juice for 120 min and then digested in simulated intestinal juice for 120 min, n is 1, 2, 3, 4, 5, 6, and sample n refers to sample 1, sample 2, sample 3, sample 4, sample 5, and sample 6.

Table 5 (unit: percentage increase (%))

|  | Example 1 | Example 2 | Example 3 | Example 4 | Example 5 | Comparative example 1 |
|---|---|---|---|---|---|---|
| Short peptides | Sample 1 | Sample 2 | Sample 3 | Sample 4 | Sample 5 | Sample 6 |
| 0<X≤10 | 173.37 | 259.80 | 314.59 | 360.41 | 376.76 | 163.99 |

It can be seen from the data in Table 5 and the curves in FIG. 1-FIG. 6: after in vitro gastrointestinal digestion, the samples of the protein compositions of Examples 1-5 have a significantly higher proportion of increase in small molecule peptides ($0 < X \leq 10$) than the control sample (sample 6 of Comparative example 1). It is generally believed that proteins are gradually degraded and broken down into small molecules in the digestive tract, and the lower the molecular weight of the peptide fragment, the more conducive to absorption. From this point, it can also be proved that the protein compositions of Examples 1-5 have good digestion performance. In particular, the samples corresponding to Examples 2-5 have an obviously higher proportion of small molecule peptide fragments than that of Comparative Example 1, indicating that when the content of $\alpha$-lactalbumin is controlled to be 21% to 32% and the content of $\beta$-casein is controlled to be 26% to 32%, excellent results in terms of the release of small molecule peptides can be obtained.

5. Characteristic peptide fragments

The data of the characteristic peptide fragments released in the in vitro gastrointestinal digestion experiments of the samples of the protein compositions of Examples 1-5 are as shown in Table 6.

Table 6

|  | Example 1 | Example 2 | Example 3 | Example 4 | Example 5 |
|---|---|---|---|---|---|
|  | Sample 1 | Sample 2 | Sample 3 | Sample 4 | Sample 5 |
| F.QINNKIW.C | 2.05E+06 | 3.24E+06 | 4.75E+05 | 1.27E+07 | 7.57E+06 |
| A.IVENNESTEYGLF.Q | 4.99E+06 | 2.19E+06 | 2.82E+06 | 7.76E+06 | 2.02E+06 |
| K.GYGGVS.L | 2.37E+06 | 4.07E+06 | 5.64E+06 | 4.49E+06 | 5.80E+06 |
| K.FLDDDLTDD.I | 1.14E+06 | 6.07E+05 | 4.66E+05 | 2.46E+06 | 1.19E+06 |
| V.MFPPQ.S | 2.27E+08 | 6.24E+08 | 9.43E+08 | 9.62E+08 | 7.86E+08 |
| L.TQTPVVVPP.F | 1.17E+08 | 2.48E+08 | 3.39E+08 | 3.90E+08 | 3.49E+08 |
| L.VYPFPGPIP.N | 6.41E+07 | 1.32E+08 | 1.43E+08 | 1.36E+08 | 1.81E+08 |
| L.PQNIPPL.T | 1.18E+08 | 1.78E+08 | 1.90E+08 | 1.21E+08 | 1.29E+08 |
| Q.TLALPPQP.L | 1.58E+07 | 3.07E+07 | 4.38E+06 | 1.02E+08 | 8.58E+07 |

Casein becomes polypeptide fragments after being rapidly hydrolyzed in the stomach, more peptide fragments are also released in the small intestine, while peptide fragments derived from $\alpha$-lactalbumin and $\beta$-lactoglobulin have also been reported multiple times to be found in the digestive tract. Further studies have shown that these peptide fragments released from milk protein have important physiological functions, such as regulating immune function, lowering blood pressure, inhibiting bacteria, promoting mineral absorption, regulating blood glucose metabolism, regulating appetite, exerting morphine-like functions (opioid peptides), and anti-oxidation. According to the report by Alice et al., a plurality of peptide fragments having different physiological functions are found in body fluids of humans after ingesting milk products, such as opioid peptides derived from $\beta$-casein, ACE inhibitory peptides, and ACE inhibitory peptides derived from $\alpha$-

lactalbumin. Using LC-MS/MS analysis, Karima et al. show that 30 minutes, 90 minutes and 120 minutes after ingestion of formula milk powder in piglets, a large number of polypeptides derived from β-casein (positions 74-91) are detected in the jejunum and ileum, respectively, and these peptide fragments have immunomodulatory and blood pressure lowering functions; and 30 minutes and 90 minutes after ingestion, peptide fragments of 7-15 amino acids derived from β-lactoglobulin are detected in the jejunum, while large peptide fragments, containing 23 amino acids and 40 amino acids, respectively, derived from β-lactoglobulin were found in the ileum, and these peptide fragments are associated with the proliferation of splenocytes and the release of cytokines, and speculated to have the function of regulating immune action.

Through breast milk research, it is found that there are a large number of peptide fragments in breast milk, and in the infant's digestive tract, more peptide fragments are released as the digestion progresses. In vitro digestion studies have shown that β-casein in breast milk is the main source of functional peptide fragments, 305 peptide fragments of this source are detected in undigested breast milk, while the number of peptide fragments increases to 646 after digestion; and a similar phenomenon exists for α-lactalbumin, with no peptide fragments of this source reported in undigested breast milk, while 58 peptide fragments after digestion are reported.

By comparing the peptide fragments produced after in vitro gastric digestion, it is found that the samples of the protein compositions of Examples 1-5 produce some characteristic peptide fragments, which are not found in the control sample 6 (Comparative example 1). Further analysis of the functions of these peptide fragments shows that the characteristic peptides produced after digestion are believed to play the following physiological functions in vivo: anti-inflammatory response, resistance to the invasion of external pathogens, signaling in the body, etc.

In summary, it can be seen from the above experimental results that:

the samples of Examples 1-7, 9-10 and 12 of the present invention all have a relatively low proportion of residual whey protein at different digestion time points, indicating that the protein compositions of these examples have an excellent digestion performance for whey protein, and especially the protein compositions of Examples 5 and 6 have the most prominent digestion performance for whey protein.

The samples of the protein compositions of Examples 1-12 can release a variety of free amino acids in the in vitro gastric digestion experiments.

In particular, the protein compositions of Examples 1-12 can release a large number of essential amino acids after digestion, with a larger fold increase in the EAA released, indicating that the protein compositions of Examples 1-12 can produce more beneficial essential amino acids during the digestion process.

After in vitro gastrointestinal digestion, the samples of the protein compositions of Examples 1-5 have a significantly increased proportion of increase in small molecule peptides ($0 < X \leq 10$), which is obviously better than that of the control sample (sample 6 of Comparative example 1). From this point, it can also be proved that the protein compositions of Examples 1-5 have good digestion performance. In particular, the samples corresponding to Examples 2-5 have an obviously higher proportion of small molecule peptide fragments than that of Comparative example 1, indicating that when the content of α-lactalbumin is controlled to be 21% to 32% and the content of β-casein is controlled to be 26% to 32%, excellent results in terms of the release of small molecule peptides can be obtained.

The samples of the protein compositions of Examples 1-5 can produce characteristic peptide fragments during the digestion process, and these peptide fragments are not found in the control sample 6 (Comparative example 1). Further analysis of the functions of these peptide fragments shows that the characteristic peptides produced after digestion are believed to play the following physiological functions in vivo: anti-inflammatory response, resistance to the invasion of external pathogens, signaling in the body, etc.

**Claims**

1. A method for improving digestion performance for proteins in food, comprising controlling the content of α-lactalbumin in the food to be 10.5% to 51.0%, and controlling the content of β-casein in the food to be 10.0% to 40.0%, relative to 100% of the total protein content in the food.

2. The method according to claim 1, comprising controlling the content of α-lactalbumin in the food to be 15.0% to 32.0%, and controlling the content of β-casein in the food to be 20.0% to 32.0%, relative to 100% of the total protein content in the food.

3. The method according to claim 1, comprising controlling the content of α-lactalbumin in the food to be 21.0% to 32.0%, and controlling the content of β-casein in the food to be 26.0% to 32.0%, relative to 100% of the total protein content in the food.

4. The method according to claim 1, comprising controlling the content of α-lactalbumin in the food to be 21.0% to 32.0%, and controlling the content of β-casein in the food to be 29.0% to 32.0%, relative to 100% of the total protein content in the food.

**5.** The method according to claim 1, comprising controlling the content of whey protein in the food to be 55.0% to 65.0%, and controlling the content of casein in the food to be 35.0% to 45.0%; and controlling the content of $\alpha$-lactalbumin in the food to be 32.0% and the content of $\beta$-casein in the food to be 32.0%, or controlling the content of $\alpha$-lactalbumin in the food to be 29.0% and the content of $\beta$-casein in the food to be 32.0%, or controlling the content of $\alpha$-lactalbumin in the food to be 21.5% and the content of $\beta$-casein in the food to be 29.0%, or controlling the content of $\alpha$-lactalbumin in the food to be 21.0% and the content of $\beta$-casein in the food to be 26.0%; the above contents all being relative to 100% of the total protein content in the food.

**6.** The method according to claim 1, wherein the improving digestion performance for proteins in food comprises one or more of: improving the digestibility of whey protein, increasing the number of types of free amino acids released, improving the proportion of essential amino acids (EAA) released among the free amino acids released, increasing the production of small-molecule peptides, and increasing the number of types of characteristic peptides produced.

**7.** A protein composition, comprising 21.0% to 32.0% of $\alpha$-lactalbumin and 26.0% to 32.0% of $\beta$-casein relative to 100% of the total protein content in the protein composition.

**8.** The protein composition according to claim 7, comprising 21.0% to 32.0% of $\alpha$-lactalbumin and 29.0% to 32.0% of $\beta$-casein relative to 100% of the total protein content in the protein composition.

**9.** The protein composition according to claim 8, comprising 32.0% of $\alpha$-lactalbumin and 32.0% of $\beta$-casein, or 29.0% of $\alpha$-lactalbumin and 32.0% of $\beta$-casein, or 21.5% of $\alpha$-lactalbumin and 29.0% of $\beta$-casein, or 21.0% of $\alpha$-lactalbumin and 26.0% of $\beta$-casein, relative to 100% of the total protein content in the protein composition.

**10.** The protein composition according to claim 7, comprising 55.0% to 65.0% of whey protein and 35.0% to 45.0% of casein relative to 100% of the total protein content in the protein composition.

**11.** A food product comprising the protein composition according to claim 7, and comprising 21.0% to 32.0% of $\alpha$-lactalbumin and 26.0% to 32.0% of $\beta$-casein relative to 100% of the total protein content in the food product.

**12.** The food product according to claim 11, comprising 55.0% to 65.0% of whey protein and 35.0% to 45.0% of casein relative to 100% of the total protein content in the food product.

**13.** The food product according to claim 11, wherein the total protein content in the food product is 10.20 to 16.10 g/100 g.

**14.** The food product according to claim 11, wherein the content of $\alpha$-lactalbumin in the food product is 1.50 to 5.30 g/100 g, and the content of $\beta$-casein in the food product is 2.00 to 5.20 g/100 g.

**15.** The food product according to claim 11, wherein the food product is milk powder or liquid milk.

Figure 1

Figure 2

Figure 3

Figure 4

Figure 5

Figure 6

## INTERNATIONAL SEARCH REPORT

| International application No. |
|---|
| **PCT/CN2022/142351** |

**A. CLASSIFICATION OF SUBJECT MATTER**

A23C9/152(2006.01)i;A23C9/158(2006.01)i;A23C9/156(2006.01)i;A23C9/16(2006.01)i

According to International Patent Classification (IPC) or to both national classification and IPC

**B. FIELDS SEARCHED**

Minimum documentation searched (classification system followed by classification symbols)

A23C,A23L

Documentation searched other than minimum documentation to the extent that such documents are included in the fields searched

Electronic data base consulted during the international search (name of data base and, where practicable, search terms used)

CNABS, DWPI, VEN, CNTXT, WPABSC, CJFD: 奶粉, 蛋白, 乳清蛋白, 酪蛋白, 氨基酸, 肽, 乳白蛋白, 液态奶, milk powder, protein, whey protein, casein, amino acid+, peptide+, lactalbumin, fluid milk

**C. DOCUMENTS CONSIDERED TO BE RELEVANT**

| Category* | Citation of document, with indication, where appropriate, of the relevant passages | Relevant to claim No. |
|---|---|---|
| X | CN 111990462 A (HEILONGJIANG WONDERSUN DAIRY CO., LTD.) 27 November 2020 (2020-11-27) description, embodiments 3 and 6 | 1-15 |
| A | CN 101803743 A (SHENGYUAN NUTRACEUTICALS CO., LTD.) 18 August 2010 (2010-08-18) claim 1 | 1-15 |
| A | CN 107136295 A (INNER MONGOLIA YILI INDUSTRIAL GROUP CO., LTD.) 08 September 2017 (2017-09-08) claim 1 | 1-15 |
| A | CN 111836555 A (FRIESLANDCAMPINA NEDERLAND BV) 27 October 2020 (2020-10-27) claim 1 | 1-15 |
| A | GB 201420345 D0 (GRENADE UK LTD.) 31 December 2014 (2014-12-31) claim 1 | 1-15 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 March 2023** | **24 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

| International application No. |
| --- |
| **PCT/CN2022/142351** |

| Patent document cited in search report | | | Publication date (day/month/year) | Patent family member(s) | | | Publication date (day/month/year) |
| --- | --- | --- | --- | --- | --- | --- | --- |
| CN | 111990462 | A | 27 November 2020 | None | | | |
| CN | 101803743 | A | 18 August 2010 | CN | 101803743 | B | 19 September 2012 |
| CN | 107136295 | A | 08 September 2017 | CN | 107136295 | B | 27 July 2021 |
| CN | 111836555 | A | 27 October 2020 | WO | 2019170707 | A1 | 12 September 2019 |
| | | | | EP | 3761809 | A1 | 13 January 2021 |
| GB | 201420345 | D0 | 31 December 2014 | ES | 2667705 | T3 | 14 May 2018 |
| | | | | PL | 2873331 | T3 | 28 September 2018 |
| | | | | GB | 2522112 | A | 15 July 2015 |
| | | | | GB | 2522112 | B | 03 January 2018 |
| | | | | EP | 2873331 | A1 | 20 May 2015 |
| | | | | EP | 2873331 | B1 | 31 January 2018 |

Form PCT/ISA/210 (patent family annex) (July 2022)